# EUROPÄISCHE PATENTSCHRIFT

(11) **EP 2 830 763 B1**
(45) Veröffentlichungstag und Bekanntmachung des Hinweises auf die Patenterteilung: **25.05.2016**
(21) Anmeldenummer: 13712292.5
(22) Anmeldetag: 27.03.2013
(51) Int. Cl.: G01N 27/28, B01L 3/00

(54) **INTEGRIERTES EINWEG-CHIPKARTUSCHENSYSTEM FÜR MOBILE MULTIPARAMETERANALYSEN CHEMISCHER UND/ODER BIOLOGISCHER SUBSTANZEN**
INTEGRATED DISPOSABLE CHIP CARTRIDGE SYSTEM FOR MOBILE MULTIPARAMETER ANALYSES OF CHEMICAL AND/OR BIOLOGICAL SUBSTANCES
SYSTÈME DE CARTOUCHE À PUCE JETABLE INTÉGRÉ POUR ANALYSES MULTI-PARAMÈTRES MOBILES DE SUBSTANCES CHIMIQUES ET/OU BIOLOGIQUES

(30) Priorität: 29.03.2012 DE 102012205171
(43) Veröffentlichungstag der Anmeldung: 04.02.2015
(73) Patentinhaber: Fraunhofer-ges. zur Förderung der Angewandten Forschung E.V., 80686 München (DE)
(72) Erfinder: BLOHM, Lars, 25746 Heide (DE); NEBLING, Eric, 25421 Pinneberg (DE); ALBERS, Jörg, 25572 Sankt Margarethen (DE); PIECHOTTA, Gundula, 25582 Hohenaspe (DE)
(74) Vertreter: Olgemöller, Luitgard Maria
(86) Internationale Anmeldenummer: PCT/EP2013/056562
(87) Internationale Veröffentlichungsnummer: WO 2013/144225

(56) Entgegenhaltungen:
- WO-A1-98/05958
- US-A- 5 096 669
- US-A- 5 638 828
- US-A1- 2007 231 213
- US-A1- 2010 291 588
- Eric Nebling ET AL: "Fraunhofer ISIT und Pocdia präsentieren auf der Medica 11 neuartiges Point-of-Care Diagnostik System für Hepatitis-C-Untersuchungen", , 24. Oktober 2011 (2011-10-24), XP055072409, website Fraunhofer-Institut für Siliziumtechnologie (Itzehoe, Germany) Gefunden im Internet: URL:http://www.isit.fraunhofer.de/de/Aktue lles/Point-of-Care_Diagnostik_System.html [gefunden am 2013-07-23]
- Eric Nebling ET AL: "Fraunhofer ISIT, Fraunhofer IME, PharmedArtis und TOXAVIS gründen POCDIA GmbH", , 11. Mai 2011 (2011-05-11), XP055072412, website Fraunhofer-Institut für Siliziumtechnologie ISIT (Itzehoe, Germany) Gefunden im Internet: URL:http://www.isit.fraunhofer.de/de/Aktue lles/Pocdia.html [gefunden am 2013-07-23]

## Beschreibung

Die Erfindung betrifft ein Einweg-Messchipkartuschenmodul (im Folgenden kurz auch: Messchipkartuschenmodul, Messchipkartusche oder Kartusche) zur Durchführung vorzugsweise mobiler Multiparameteranalysen chemischer und/oder biologischer Substanzen, insbesondere zur Detektion und/oder Bestimmung der Konzentration von Zielsubstanzen in flüssigen Proben. Des Weiteren betrifft die Erfindung ein Einweg-Chipkartuschen-System (im Folgenden kurz: System), das ein auswechselbares Messchipkartuschenmodul aufweist, sowie ein Verfahren zum Durchführen derartiger Analysen in einem solchen System.

Systeme dieser Art finden ihre Verwendung im Bereich mobiler reproduzierbarer chemischer und biochemischer Analysen, insbesondere im Bereich der Point-of-Care-Diagnostik. Dabei wird das Ziel verfolgt, auf eine herkömmliche stationäre Laboranalyse mit unvermeidlichen Wartezeiten zu verzichten und stattdessen eine Methode zu ermöglichen, mit der man die gewünschten Analyseergebnisse vor Ort, z.B. am Ort der Patientenbehandlung, unmittelbar und zeitnah (praktisch sofort) erhält.

Aus dem Stand der Technik sind folgende Systeme bekannt, die auf auswechselbaren Messkartuschen zur Aufnahme und Analyse einer Probe basieren:
WO 2006/125767 A1 offenbart ein Analysegerät zur integrierten und automatisierten DNA- oder Protein-Analyse, das in ein Steuergerät und eine in dieses einsetzbare Cartridge in Form und Größe einer Scheckkarte aufgeteilt ist. Die Cartridge enthält Kanalabschnitte mit diversen Reagenzien in trockener und langzeitstabiler Form, einen Probenport zum Einpipettieren einer Probe, eine PCR-Kammer zur Durchführung einer PCR (polymerase chain reaction) und eine Detektionskammer mit einem DNA-Sensor. Das für den Analysevorgang erforderliche Wasser wird im Steuergerät aufbewahrt und mittels fluidischer Komponenten des Steuergeräts, unter anderem einer Pumpe und diverser Füllstandssensoren, zu den Wasserports der in das Steuergerät eingesetzten Cartridge befördert. Die Steuerung der Wasserbeförderung sowie das Auslesen der Messdaten erfolgt mittels einer ebenfalls im Steuergerät untergebrachten Elektronik.

US 2007/0166192 A1 zeigt ein Probenaufbereitungsmodul zur Aufnahme und Aufbereitung spezifischer biologischer Proben für eine Analyse in einer standardisierten und miniaturisierten "Lab-on-a-Chip"-Cartridge. Dieses Modul ist jeweils für eine bestimmte Probenart ausgelegt und verfügt über einen Hohlraum für aufwendige oder großräumige Aufbereitungsschritte, die nicht innerhalb der Cartridge durchgeführt werden können. Dies sind etwa Extraktion oder Vermehrung von Zellen einer Zielsubstanz, mechanische Homogenisierung fester Gewebeproben etc.. Die aufbereitete Probe gelangt aus dem Modul über eine geeignet dimensionierte und abgedichtete Öffnung direkt in den Probeneingang der Cartridge. Die Probennahme und -abgabe wird im Modul entweder manuell und unter Ausnutzung der Schwerkraft oder mittels eines im Hohlraum verschiebbaren Kolbens durchgeführt.

US 5,096,669 offenbart ein System zur Durchführung elektrochemischer Messungen an Blut und anderen Flüssigkeiten mit einer Einweg-Messeinheit, die in ein mobiles Auslesegerät eingesteckt werden kann. Die Messeinheit enthält Sensoren, einen Beutel mit Kalibrierflüssigkeit samt Dorn, ein Luftblasenreservoir und ein Kanalsystem mit Probeneingang. Die Probe gelangt durch die Kapillarwirkung in das Kanalsystem. Das Durchstechen des Kalibrierbeutels zur Kalibriermessung und die Beförderung der Probe zum Sensor hin durch das Zusammendrücken der Luftblase werden von dem Auslesegerät ausgelöst bzw. gesteuert.

US 5,638,828 zeigt ein Probennahmegerät zum Einsammeln flüssiger Proben und deren Einbringen in ein Einweg-Messgerät für eine Echtzeitanalyse. Innerhalb des Probennahmegeräts wird die Probe zunächst in einem Reservoir gesammelt, in welches eine präzise dimensionierte Kapillare mündet, die sich durch die Kapillarwirkung mit der Probe füllen kann. Nach dem manuellen Anschließen des Probennahmegeräts mit der gefüllten Kapillare an das Messgerät ist diese an ihren beiden Enden mit dem Inneren des Messgeräts verbunden. Die Fortbewegung der Probenflüssigkeit im Inneren des Messgeräts erfolgt durch das gezielte Zusammendrücken einer darin vorgesehenen Luftblase, die die Probe entlang der Kapillare und weiterhin über den Sensor verschieben kann.

US 2003/0170881 A1 offenbart eine Vorrichtung zur Durchführung diverser Analysen an flüssigen Proben. Die Anpassungsfähigkeit an unterschiedliche Analyseabläufe wird durch innerhalb einer Einweg-Kartusche vorgesehene "Ventilmittel", wie z.B. Verengungen, gewährleistet, die den Fluss der Probe sowie einer zweiten in einem Beutel in der Kartusche vorgesehenen Kalibrier- und Spülflüssigkeit samt Luftblasen beeinflussen. Die Kartusche wird in ein Auslesegerät eingesteckt, wodurch und von welchem aus Druck auf bestimmte paddelförmige Bereiche im Kartuschendeckel zur Beförderung der in der Kartusche befindlichen Fluide ausgeübt wird. Kalibriermessungen werden vor oder nach der Probenmessung durchgeführt, wobei Kanäle und Sensoren dazwischen mit der zweiten Flüssigkeit gereinigt werden. Reagenzien sind in trockener Form in den Kanälen der Kartusche vorgesehen.

US 5,405,510 betrifft eine tragbare Messeinheit für die Messung von mehrfachen, sequentiellen Flüssigkeitsproben. Die Vorrichtung besitzt eine Wegwerfkartusche, die einen Zugang mit einem Einlass zu einer Durchflusszelle mit hydratisiertem Sensor und, in Flüssigkeitskontakt, aber räumlich getrennt, einer Referenzelektrode besitzt. Neben den notwendigen elektrischen Einrichtungen enthält die Kartusche einen dehnbaren Abfallbehälter. Zwischen dem Abfallbehälter und der Durchflusszelle befindet sich ein Rückschlagventil. Nach Kalibration der Zelle kann durch den Einlass eine Probe mit einer unbekannten Menge eines bekannten Analyten geführt werden.

In DE 102 45 845 A1 wird ein Messchip mit einer von Fluid überströmbaren Reaktionsfläche (Analysezelle) offenbart, der eine Lumineszenzreaktion und deren Messung ermöglicht. Der Messchip selbst weist neben der Analysenzelle Räume auf, die der Speicherung von Probenflüssigkeit und Reagenzien dienen, mit einer Dichtung oder einem Septum verschlossen sind und mit einer Spritze durchstochen werden können. Er ist allerdings keine in sich geschlossene Einheit, sondern wirkt mit einer Basisplatte zusammen, in der über Ventile steuerbare Fluidkanäle angeordnet sind, die die Vorratsräume und die Analysezelle untereinander verbinden können.

Darüber hinaus sei auf die folgenden Dokumente verwiesen: DE 10 1009 007230 A1 offenbart eine Messzelle mit einem flexiblen Seitenwandbauteil, das gleichzeitig die Abdichtung zu einem Sensorchip und zu einer Abdeckung bewirkt. Aus DE 41 39 121 C1 ist die Integration der Durchflussmesszelle in einen Messeinsatz bekannt, der in ein die restlichen Komponenten der Vorrichtung umfassendes Basisgerät auswechselbar einsetzbar ist. US 2011/0301047 A1 schlägt vor, zwischen dem Einlass und der Messkammer einer Detektionsvorrichtung ein Ventil vorzusehen. EP 1 245 285 A2 offenbart einen mit einer Spritze beaufschlagbaren Proben-einlass. In WO 2009/062940 A1 wird eine Sensorkassette aus zwei fest miteinander verbundenen, jedoch separat hergestellten Modulen und mit einem durchgehenden Messkanal zur Aufnahme fluidischer Medien beschrieben; jedes der Module ist elektrisch über einen Kontakt mit einem Analysator verbunden. Die Strömungskanäle einer Vorrichtung zur austauschbaren Aufnahme von Messkartuschen bzw. Messzellen gemäß WO 98/05958 A1 besitzen wiederholt anstechbare Septen; zusätzlich besitzt die Vorrichtung eine in einem Ventilblock integrierte Probenaufnahme, die von außen für Spritzen oder Kapillaren erreichbar ist.

Das Fraunhofer-Institut für Siliziumtechnologie (ISIT) hat zusammen mit der POCDIA GmbH ein neues Point-of-Care Diagnostik System vorgestellt (http://www.isit.fraunhofer.de/ de/Aktuelles/Point-of-Care_Diagnostik_System.html; gefunden am 23.07.2013)

Die bekannten Vorrichtungen und Analysemethoden erfordern jeweils eine oder mehrere der folgenden Maßnahmen:
- chargenspezifische Kalibrierung durch exemplarische Tests während/nach der Produktion;
- manuelle Arbeitsschritte bei der Nutzung, insbesondere bei der Probenvorbereitung;
- spezielle Proben-Aufreinigung (insbesondere für optische Detektionsmethoden);
und/oder es handelt sich bei ihnen um Vorrichtungen, die durch eine oder mehrere der folgenden Komponenten gekennzeichnet sind:
- Analysegeräte mit darin enthaltenen Fluidikkomponenten (Pumpen, Ventilen) zur Prozessierung von Flüssigkeiten im Gerät (d.h. Flüssigkeitskontakt von Gerätekomponenten) oder alternativ z.B. auch manuelle Zuführung von Flüssigkeiten;
- Verbrauchsmittel-Set mit vielen verschiedenen Komponenten und zum Teil komplizierter Handhabung (Pipetten, Reagenzien, Kartuschen, Chips...).

Existierende (Point-of-Care-)Systeme haben daher einige der folgenden Nachteile:
- keine Kalibrierungsmöglichkeit zur Laufzeit der Analyse;
- deutlich begrenzte, auf ein Minimum reduzierte Prozessierungs- und Kontrollmöglichkeiten für die Probe und die Reagenzien innerhalb des Einweg-Messgeräts z.B. mittels einer einzigen Luftblase zur Beförderung sowie Trennung der einzelnen Fluide voneinander;
- Notwendigkeit der Verwendung von Trockenreagenzien und deren Auflösung/Suspension in einem Kanal oder sogar Mikrokanal der Messkartusche während des eigentlichen Analysevorgangs mit damit verbundenen Unsicherheiten bzgl. deren Verteilung, Konzentration und des gesamten Zeitablaufs;
- mangelhafte Güte der Reproduzierbarkeit der Analysen von Test zu Test;
- Erfordernis einer manuellen Probenvorbereitung/-Dosierung vor der Messung z.B. für Blutproben;
- Kontamination von Analysegerätekomponenten, insbesondere der Fluidikkomponenten, durch Flüssigkeitskontakt, was eine aufwendige Wartung und Pflege erfordert;
- eine komplizierte, aufwendige Verbrauchsmittellogistik.

Festzuhalten ist insgesamt das Erfordernis einer stärkeren Automatisierung bzw. der Erhöhung des Integrationsgrades kompletter biochemischer Analysevorgänge für mobile reproduzierbare Multiparameteranalysen, z.B. für den Bereich der Point-of-Care-Diagnostik.

Der vorliegenden Erfindung liegt daher die Aufgabe zugrunde, eine Vorrichtung und ein Verfahren zur Durchführung vorzugsweise mobiler chemischer und/oder biologischer Probenanalysen anzugeben, welche eine verbesserte Reproduzierbarkeit der Tests, eine bessere Automatisierung und einen erhöhten Integrationsgrad bei einem möglichst niedrigen Kosten-, Herstellungs- und Bedienungsaufwand ermöglichen.

Diese Aufgabe wird durch ein Messchipkartuschenmodul zur Durchführung vorzugsweise mobiler Multiparameteranalysen chemischer und/oder biologischer Substanzen gelöst, umfassend einen Probeneingang, durch welchen eine Probensubstanz von außen ins Messchipkartuschenmodul gelangen kann, zusätzlich dazu einen oder mehrere Reagenzieneingänge, durch welche Reagenzien von außen, z.B. von einem geeigneten Reagenzienlagerungs- und Prozessierungsmodul, dem Messchipkartuschenmodul zugeführt werden können, einen Messchip mit einer für die Probenanalyse vorgesehenen Oberfläche, die zumindest teilweise einen Boden oder eine Wand einer Analysezelle mit zwei Öffnungen darstellt, die derart ausgebildet ist, dass eine die Probensubstanz umfassende Flüssigkeit durch eine erste Öffnung der Analysezelle zugeführt werden kann, sowie ein Kanalsystem, in dem die Probensubstanz vom Probeneingang zur Analysezelle und die Reagenzien von dem mindestens einen Reagenzieneingang zur Analysezelle befördert werden können. Das Kanalsystem enthält in seinem Inneren vor Beginn des gesamten Analysevorgangs keine für die Analyse benötigten festen Substanzen (Reagenzien in fester Form), und vorzugsweise keine weiteren Substanzen außer Luft und/oder Schutzgas, die in die Analysezelle gelangen können. Das Messchipkartuschenmodul nach der Erfindung kann insbesondere die Ausgestaltung gemäß Anspruch 1 besitzen.

Die Probensubstanz (kurz: Probe) kann dem Probeneingang in Form einer Flüssigkeit wie Blut oder Serum, eines Feststoffs oder einer Wischprobe zugeführt werden.

Ein erster vom Probeneingang außenseitig getrennter Reagenzieneingang kann z.B. zum Transport, zur Verdünnung oder Verflüssigung der Probensubstanz und/oder zur Zugabe von zur Analyse erforderlichen reaktiven Substanzen genutzt werden. Während der Probeneingang selbst auf das Einsammeln der Probensubstanz zugeschnitten und in der Regel nach einer erfolgten Probennahme verschlossen werden kann, erlaubt es dieser weitere Eingang in die Kartusche, die weitere Prozessierung der Probensubstanz flexibel zu gestalten.

Der Begriff "Reagenz" wird in diesem Kontext allgemein für eine beliebige Substanz verwendet, die in das Kanalsystem der Kartusche über einen Reagenzieneingang gelangen kann. Als Reagenzien können im Rahmen der Erfindung z.B. chemisch oder biologisch aktive Substanzen, Kalibrierlösungen mit bekannten Konzentrationen einer oder mehrerer Referenzsubstanzen, Pufferlösungen, Enzymlösungen, Substratlösungen, Detektorlösungen, (z.B. isotonische) Salzlösungen, destilliertes Wasser, Reinigungslösungen, Luft oder inertes Gas dienen.

In einer Ausführungsform umfasst das erfindungsgemäße Modul mindestens zwei Reagenzieneingänge, von denen einer für die Zufuhr von Kalibrierlösung genutzt werden kann, um eine Kalibrierung zur Laufzeit in einem Ein-Kanal-System zu ermöglichen, wie unten näher beschrieben. Selbstverständlich können in dieser Ausführungsform mehr als die genannten zwei Reagenzieneingänge vorhanden sein.

Der Begriff "Messung" und "Messchip" etc. umfasst im Kontext der vorliegenden Anmeldung neben einer möglichen Messung eines oder mehrerer Parameter wie z.B. der Konzentration bestimmter Substanzen z.B. chemischer und/oder biologischer Natur, wie einzelner Moleküle, Stoffe oder Zellen (quantitative Messungen), auch deren qualitative Detektion.

Der Messchip kann beispielsweise Elektroden, ggf. mit Fängermolekülen für eine Zielsubstanz, zur Durchführung elektrochemischer Analysen aufweisen. Die Elektroden können als Inter-digitalelektroden ausgebildet sein; die Oberfläche kann zur erleichterten Anbindung von Fängermolekülen über SH-Bindungen mit Gold belegt sein bzw. aus Gold bestehen. Die Messung kann amperometrisch, alternativ auch voltammetrisch oder mithilfe beider Verfahren erfolgen. Es ist auch eine optische Messung zur Probenanalyse möglich.

Die Analysezelle ist an der für die Messung vorgesehenen Oberfläche des Messchips angeordnet, z.B. unmittelbar oberhalb eines flächig ausgebildeten Messchips. In spezifischen Ausgestaltungen kann z.B. eine Unterseite des Messchips für die Messung verwendet werden. Der Messchip kann auch seitlich innerhalb der Kartusche angeordnet sein, mit einer entsprechenden Anordnung der Analysezelle an seiner zur Messung vorgesehenen Innenoberfläche bezüglich der Kartusche.

Die Analysezelle (kurz: Zelle) ist für die Aufnahme einer Flüssigkeit ausgebildet. Sie enthält eine erste Öffnung, durch die die Flüssigkeit in die Zelle gelangen kann, während z.B. Luft oder verbrauchte Lösung aus der Zelle durch die zweite Öffnung verdrängt wird.

Zum Transportieren der Probe und der Reagenzien in der Kartusche zwischen den jeweiligen Außen-Eingängen (gemeint sind der Proben- und ein oder mehrere Reagenzieneingänge) zu der Zelle ist ein Kanalsystem vorgesehen. Dieses kann in Inneren der Kartusche sowohl miteinander verbundene als auch vollständig voneinander getrennte Untersysteme von Kanälen enthalten.

Das Kanalsystem dient z.B. einer Verbindung eines Reagenzieneingangs mit dem Probeneingang innerhalb der Kartusche, um die Probe vor deren Eintritt in die Analysezelle mit einem Reagens zu vermischen bzw. aufzubereiten, wie bereits voranstehend kurz angesprochen.

Die erfindungsgemäße Kartusche enthält vor der Zugabe von Reagenzien von außen über die Reagenzieneingänge keine Trockenreagenzien in dem Kanalsystem.

Bevorzugte Ausführungsformen der Erfindung sind in den abhängigen Ansprüchen und in der nachfolgenden Beschreibung angegeben.

Vorzugsweise stellt die Analysezelle eine Durchflusszelle dar, d.h. eine Flüssigkeit kann durch die erste Öffnung in die Durchflusszelle gelangen und diese durch die zweite Öffnung teilweise oder ganz wieder verlassen. Durch das Anlegen eines Ansaugdrucks an der zweiten Öffnung, beispielsweise über deren Verbindung mit einem Reagenzieneingang, kann z.B. der Durchfluss oder die Verteilung der zu analysierenden Flüssigkeit über der Messchipoberfläche beeinflusst werden.

Darüber hinaus ermöglicht eine Durchflusszelle eine sukzessive Analyse einer Referenzsubstanz und einer Probe. So kann beispielsweise eine Kalibrierlösung, die eine bekannte Menge einer oder mehrerer Referenzsubstanz(en) enthält, durch einen von mehreren Reagenzieneingängen in die Durchflusszelle geleitet und die enthaltene(n) Referenzsubstanz(en), ggf. nach Anbindung an entsprechende Fängermoleküle und/oder unter Zuhilfenahme weiterer Reagenzien, qualitativ, halbquantitativ oder quantitativ bestimmt werden, bevor die Probe in die Durchflusszelle gelangt. Über Differenzmessungen, Eichkurven und dgl. lässt sich auf diese Weise mit nur einer Analysezelle eine Kalibrierung zur Laufzeit erreichen, indem der oder die zu detektierenden Analyte in der Probe mit der/den Referenzsubstanz(en) in der Kalibrierlösung qualitativ, halbquantitativ oder quantitativ verglichen werden kann.

Eine bevorzugte Ausführungsform der Kartusche weist jedoch zwei identische Analysezellen auf der Chipoberfläche auf, sodass simultan die Analyse einer Probe in einer ersten und einer bekannten Referenzsubstanz in der zweiten Zelle durchgeführt werden können, um das Analyseverfahren zu kalibrieren / zu eichen.

Zur gleichzeitigen und einander entsprechenden Prozessierung der Probe und der Referenzsubstanz zwischen dem jeweiligen Außen-Eingang und der jeweiligen Zelle sind in dieser Ausführungsform zwei voneinander vollständig getrennte, einander zum Zwecke der gleichen Prozessierung entsprechende Kanalsysteme vorgesehen. Diese Kanalsysteme können grundsätzlich voneinander verschiedene geometrische Formen haben, denn es kommt lediglich auf eine sachlich vergleichbare Prozessierung, z.B. was den Zeitverlauf oder die Menge der zugesetzten Reagenzien angeht, in den beiden Kanalsystemen an. Dies kann beispielsweise (vorausgesetzt, die Proben- und die Referenzsubstanz besitzen etwa gleiche Viskositätswerte) durch eine ungefähr gleiche Länge der beiden Kanalsysteme erreicht werden.

In dieser Ausführungsform sind jeweils zwei einander entsprechende, mit dem jeweiligen Kanalsystem verbundene Reagenzieneingänge vorgesehen, deren einer der Zuführung der Referenzsubstanz und deren anderer der Zuführung von Luft, einer Pufferlösung, Enzymlösung, Substratlösung oder dergleichen dient, wie oben für das einteilige System beschrieben.

Vorzugsweise sind in der Kartusche zwei oder mehr Reagenzieneingänge vorgesehen, mittels derer einem Kanalsystem zwei oder mehr unterschiedliche Reagenzien zugeführt werden können. In Kombination mit der obigen bevorzugten Ausführungsform können die mit den unterschiedlichen Kanalsystemen verbundenen Reagenzieneingänge z.B. als zwei parallele Reihen angeordnet sein.

Wegen der von außen zugänglichen Anordnung können jeweils zwei unterschiedliche Reagenzieneingänge in der erfindungsgemäßen Kartusche unabhängig voneinander bedient, z.B. mit flüssigen Reagenzien gefüllt oder mit Unter- oder Überdruck beaufschlagt werden. Wegen deren grundsätzlich ähnlicher Ausgestaltung können die verschiedenen Reagenzieneingänge aber auch gleichartig, z.B. synchron, bedient werden.

Mit der steigenden Anzahl der Reagenzieneingänge steigt die Flexibilität, die Anpassungsfähigkeit an die Anforderung einer Anwendung, sowie, falls erwünscht, die Komplexität der mit der Kartusche durchzuführenden Multiparameteranalysen, sowohl hinsichtlich der Reagenzien-auswahl als auch in Bezug auf den Analyseablauf.

In einer Kartusche nach der Erfindung kann ein Spülkanal zum Fortbewegen der im Probeneingang gesammelten Probe im Kanalsystem vorgesehen sein. Der Spülkanal kann beispielsweise im Kanalsystem in den Probeneingang münden, ggf. mit einer Verengung bzw. einem Kapillarstop (capillary stop) an der Mündungsstelle, derart, dass eine Spülung der Probe nur unter einer Druckbeaufschlagung des Spülkanals erfolgen kann. Der Spülkanal endet auf seiner anderen Seite in jedem Fall in einem Reagenzieneingang zum Zuführen eines Spülfluids, z.B. einer Pufferlösung oder von Luft.

In spezifischen Ausgestaltungen mit einem Spülkanal können z.B. Wischproben mittels eines Filterpads entnommen, (z.B. in Form eines gestanzten Kreises) in den Probeneingang gebracht und anschließend in das Kanalsystem durch- bzw. eingespült werden. Dazu kann z.B. ein Spritzenmodul-Vorsatz verwendet werden. Mittels eines beispielsweise mit einer Spüllösung (z.B. einem Puffer) befüllten Spritzenmoduls kann die Probe aus dem bzw. durch das Filterpad in die Kartusche gespült werden.

Die Probennahme kann für flüssige Proben, z.B. für Vollblut, durch eine oder mehrere im Probeneingang integrierte Kapillaren erfolgen. Aufgrund des Kapillareffekts wird beispielsweise durch Aufbringen eines Probentropfens eine Kapillare mit vorgegebenen Abmessungen gefüllt, wodurch eine automatische Probendosierung erfolgt. Nach dem Verschluss des Probeneingangs mit einer Verschlusskappe kann das auf diese Weise dosierte Probenvolumen in der Kartusche z.B. in einem automatisierten Verfahren prozessiert werden.

In der Verschlusskappe ist in einer weiterführenden Ausführungsform, die ebenfalls einen Spülkanal umfasst, ein Verschlusskappenkanal untergebracht, der im verschlossenen Zustand des Probensubstanzeingangs einer flüssigkeitsdichten Verbindung zwischen dem Kapillareingang und dem Spülkanal dient. Durch Luft oder eine Flüssigkeit aus dem Spülkanal lässt sich die Probe aus der Probenkapillare in das Kanalsystem zur weiteren Prozessierung verdrängen und ggf. zugleich vorverdünnen. In einem einfachen Fall hat der Verschlusskappenkanal eine U-Rohr-Form.

Eine vorverdünnte oder auch nicht vorverdünnte Probe kann in einem erfindungsgemäßen Kanalsystem anschließend aus dem Probeneingang direkt in eine erste Verdünnungs- und/oder Abfallkammer zur ggf. weiteren Verdünnung befördert werden. Hierzu kann diese Kammer mit einem Reagenzieneingang zum Zuführen von Flüssigkeit/Luft verbunden werden, wobei Verdünnungs- bzw. Spülflüssigkeit der Kammer z.B. über einen Spülkanal zugeführt werden kann. Alternativ oder zusätzlich kann die Kammer mit einem Reagenzieneingang verbunden sein, in den die ggf. verdünnte Probe zum Zwecke einer weiteren Prozessierung eingesaugt werden kann. Ferner kann die Kammer alternativ oder zusätzlich mit der zweiten Öffnung einer Durchflusszelle zur Aufnahme der analysierten Probe verbunden sein.

Vorzugsweise ist in dem oder in jedem der erfindungsgemäßen Kanalsystem(e) zumindest eine Mischkammer (kurz: Mischer) vorgesehen, in der die Proben- oder eine Referenzsubstanz mit einem oder mehreren Reagenzien auf dem Weg zur Analysezelle vermischt werden können. Der jeweilige Mischer ist hierzu mit einem oder mehreren Reagenzieneingängen verbunden. In einem Mischer kann z.B. einer ggf. vorverdünnten Probe ein Puffer, ein Substrat, ein Enzym und/oder ein Detektor zugegeben werden. Diese Schritte können auch auf verschiedene Mischer aufgeteilt sein und z.B. sukzessive erfolgen.

Der Messchip verfügt vorzugsweise über eine elektrische Anschlussstelle, an die ein externes Gerät zum Auslesen der Messdaten angeschlossen werden kann. Die elektrische Anschlussstelle (Anschluss) kann z.B. an einer von der für die Probenanalyse vorgesehenen Oberfläche des Messchips abgewandten Seite angeordnet sein, wodurch ein Flüssigkeitskontakt des elektrischen Anschlusses vermieden werden kann. Dies lässt sich durch elektrische Durchkontaktierungen durch den Chip hindurch zu dessen Unterseite realisieren. Die für die elektrische Datenaufbereitung erforderlichen elektrischen Strukturen können dabei direkt im Messchip (z.B. in Form einer applikationsspezifischen integrierten Schaltung [ASIC]) angeordnet sein oder im externen Gerät realisiert werden. Ein ASIC kann auch auf einem vom Messchip separaten Substrat in der Kartusche vorgesehen sein. Der Chip kann beispielsweise durch seitliche Presspassung mittels eines elastischen, flüssigkeitsdichtenden Materials, wie Silikon oder Polydimethylsiloxan (PDMS), flüssigkeitsdicht auf der Kartusche angeordnet sein.

Die Probennahme kann in einem einfachen Fall unmittelbar mittels des Probeneingangs erfolgen. In der Kartusche nach der Erfindung können jedoch auch zusätzliche Mittel zum Einsammeln der Probensubstanz in einem separaten Probennahmemodul untergebracht sein. Das Probennahmemodul umfasst einen Probenausgang, der flüssigkeitsdicht an den Probeneingang der Kartusche zur Weitergabe der Probe (z.B. unter Ausnutzung der Kapillarkräfte) in das Kanalsystem angeschlossen werden kann. Die Probennahme kann in diesem Fall vor oder nach dem Zusammenstecken des Probennahmemoduls mit dem Probeneingang erfolgen. Das Probennahmemodul ist vorzugsweise ebenfalls ein günstiger Einweg-Artikel, etwa in Form einer Kunststoff- oder Glaskapillare mit einem Röhrchenendstück mit einer aufreißbaren Membran zum Anschluss an den Probeneingang an einem Ende und einer Verschlusskappe an dem anderen Ende. Ein Vorteil eines separaten Probennahmemoduls besteht z.B. in der Möglichkeit, etwa bei einer missglückten Probennahme nur dieses auszuwechseln und nicht die ganze Messchipkartusche.

In spezifischen Ausgestaltungen der erfindungsgemäßen Kartusche sind vor dem Einbringen der Probensubstanz über den Probeneingang und/oder einer Referenzsubstanz über einen Reagenzieneingang keine weiteren Substanzen außer Luft und/oder Schutzgas, z.B. ein Inertgas, im Kanalsystem vorhanden. Gegebenenfalls kann dabei zusätzlich Wasser, insbesondere destilliertes Wasser, im Kanalsystem der Kartusche im Voraus vorgesehen sein.

Ein weiterer Aspekt der Erfindung ist ein modular aufgebautes Einweg-Messchipkartuschensystem (kurz: System) aus zwei trennbaren und zusammenschließbaren Hauptmodulen: einer erfindungsgemäßen Einweg-Kartusche und einem Ein- oder Mehrweg-Reagenzienmodul mit einem oder mehreren Reagenzienzylindern zur Aufnahme von Reagenzien, wobei jeder Zylinder über einen Zylinderausgang zum flüssigkeitsdichten Anschluss an einen Reagenzieneingang der Kartusche sowie über einen verschiebbaren Kolben (Antriebskolben) zur Beförderung der Probe und der Reagenzien im System verfügt. Das erfindungsgemäße System ist in Anspruch 12 angegeben.

Im erfindungsgemäßen System sind die Reagenzienaufbewahrung- und -zugabe sowie mechanische Mittel zur Bewegung sämtlicher Gase und Flüssigkeiten im System (d.h. vor allem in der Kartusche) in einem separaten Modul, dem Reagenzienmodul, untergebracht. Generell ist auch der Einsatz pastöser Massen oder pulverartiger Substanzen im Reagenzienmodul nicht ausgeschlossen.

Das System kann an ein externes Steuerungs- und Auslesegerät (sog. Steuerungseinheit) mit einem Prozessor und mindestens einem elektro-mechanischen Aktor zum Antreiben der Kolben angeschlossen werden. Die Steuerungseinheit ist vorzugsweise mittels einer rein elektrischen Schnittstelle mit dem Messchip und einer rein mechanischen Schnittstelle mit dem Reagenzienmodul verbindbar. Auf diese Weise kommt sie beim bestimmungsgemäßen Betrieb des Systems nicht mit den an der Analyse beteiligten Flüssigkeiten in Berührung und muss daher auch nicht von diesen Flüssigkeiten gereinigt bzw. allein aus diesem Grund gewartet werden.

Das erfindungsgemäße Reagenzienmodul ist im Vorfeld, d.h. vor dem eigentlichen Analysenvorgang, mit einem oder diversen Reagenzien in flüssiger Form präpariert und wird z.B. in einem einsatzbereiten Zustand vom Hersteller geliefert oder von chemisch-technisch ausgebildetem Personal vor Ort befüllt. Der Begriff "Reagenzien" umfasst in diesem Kontext neben chemisch und/oder biologisch aktiven Substanzen auch Wasser, insbesondere destilliertes Wasser, Luft oder andere bei einem Analysevorgang einsetzbare Fluide.

Die Verwendung von Reagenzienzylindern mit Kolben in einem einheitlichen Block ermöglicht zum einen einen einfachen, robusten und zuverlässigen mechanischen Antrieb der gesamten Fluidik, d.h. sämtlicher Gas- und Flüssigkeitsbewegungen im Kanalsystem der Kartusche. Zum anderen ermöglicht sie einen beliebig hohen Integrationsgrad sämtlicher Fluidikabläufe im System z.B. durch einen synchronen oder in geeigneter Weise untereinander abgestimmten Antrieb verschiedener Kolben.

Im zusammengesetzten Zustand des Systems können die Kolben zum einen Reagenzien der Kartusche zuführen und darin durch Druckerzeugung weiterbewegen. Zum anderen können die Kolben auch durch Unterdruckerzeugung, d.h. als Pumpen, zum Ansaugen oder Hin- und Herbewegen von Substanzen in der Kartusche dienen.

Der erfindungsgemäße Kolbenantrieb ist vom Prinzip her gleichartig für alle Kolben und kann an einem gemeinsamen Ort, nämlich einer mechanischen Schnittstelle zwischen dem Reagenzienmodul und der Steuerungseinheit, stattfinden. Der Antrieb zweier oder mehrerer Kolben kann beispielsweise von einem gemeinsamen elektromechanischen Aktor, z.B. einem Motor, oder von mehreren identischen Aktoren in der Steuerungseinheit ausgehen. Die Steuerungseinheit kann zum Antrieb der Antriebskolben z.B. ihrerseits eine gleiche Anzahl an Druck- und/oder Saugkolben aufweisen. Diese können beispielsweise unmittelbar oder pneumatisch auf die Antriebskolben drücken bzw. mittels geeigneter Befestigungsmittel oder wiederum pneumatisch an den Antriebskolben ziehen, und zwar jeweils an einem vom Zylinderausgang abgewandten Zylinderende.

Durch die grundsätzliche Möglichkeit sowohl eines unabhängigen als auch in geeigneter Weise abgestimmten Antriebs der verschiedenen Antriebskolben im Reagenzienmodul gewährleistet das System nach der Erfindung eine praktisch unbegrenzte Flexibilität einer Multiparameteranalyse sowohl hinsichtlich der Anzahl und Auswahl der Reagenzien als auch hinsichtlich des zeitlichen Ablaufs eines Analysevorgangs, ohne jede Einbuße hinsichtlich der Aufbaukomplexität oder -Kosten.

Zudem lässt das erfindungsgemäße Reagenzienmodul grundsätzlich eine Sichtkontrolle über seine Funktion und Intaktheit zu, z.B. bei der Verwendung transparenter oder zumindest lichtdurchlässiger Glas- oder Kunststoffzylinder bzw. eines solchen Reagenzienblocks. Dadurch können zumindest grobe Produktions- oder Ablauffehler, wie z.B. das Verstopfen eines der Fluidikkanäle im System, sofort festgestellt werden. Dies ist ein Vorteil gegenüber den von außen unsichtbar verlaufenden Analysen innerhalb von im Auslesegerät versteckten miniaturisierten Kartuschen mit Trockenreagenzien, wie sie aus dem Stand der Technik bekannt sind.

Mit dem erfindungsgemäßen System ist das Modifizieren oder Hinzufügen von Analyseschritten, ggf. unter Zugabe anderer/weiterer Reagenzien, aufgrund des geschilderten modularen Aufbaus des Systems und der Möglichkeit einer flexiblen digitalen Steuerung durch eine rein elektromechanische Steuerungseinheit äußerst einfach zu realisieren, denn es erfordert grundsätzlich keine konstruktiven Änderungen im Design der Messkartusche. Es kann bereits durch eine Änderung in der Steuerungssoftware und ggf. das Beschaffen eines (Einweg-)Reagenzienmoduls mit anderen Reagenzien bewirkt werden; die Herstellungskosten oder die Reproduzierbarkeit der Analysen werden dabei jedoch nicht beeinträchtigt.

Ferner wird das Aufbauprinzip des Systems nach der Erfindung auch mit einer steigenden Anzahl der Reagenzienzylinder im Reagenzienmodul und/oder der Kanalsysteme in der Kartusche vom Prinzip her nicht komplexer oder aufwendiger. D.h. der Hersteller kann ohne Umstieg auf andere Herstellungstechnologien mehrere Varianten der Messchipkartuschen- und Reagenzienmodule mit unterschiedlicher Anzahl oder Anordnung der Reagenzienzylinder bzw. der Kanalsysteme anbieten.

Aufgrund der Möglichkeit einer vollständigen Automatisierung des gesamten Analysevorgangs ab der abgeschlossenen Probennahme und des gleichartigen zentralisierten Antriebs sämtlicher Analysevorgänge gewährleistet das erfindungsgemäße System eine maximale Reproduzierbarkeit der Analyse von Messung zu Messung.

Die Erfindung ermöglicht eine Integration und Automatisierung von Reagenzienlagerung, Probennahme, Probenverdünnung, Reagenzienprozessierung, Detektion sowie Kalibrier- und Kontrollfunktionen in einem Einweg-Kartuschensystem für mobile Multiparameteranalysen.

In einer bevorzugten Ausführungsform weist das System eine oben beschriebene Kartusche mit zwei identischen Analysezellen zur parallelen Messung einer Probe- und einer Referenzsubstanz sowie ein Reagenzienmodul mit zwei einander entsprechenden Reagenzienzylinder-Sets auf, die eine gleiche Prozessierung der Probe und der Referenzsubstanz ermöglichen. Vorzugsweise handelt es sich dabei um zwei identische Sets von Reagenzienzylindern, die z.B. parallel zueinander im Reagenzienblock angeordnet sein können.

In allen Fällen sind einer oder mehrere der Zylinderausgänge vor dem Zusammenführen mit der Kartusche flüssigkeitsdicht, vorzugsweise durch eine Membran, verschlossen, wobei der oder die entsprechenden Reagenzieneingänge der Kartusche jeweils eine Hohlnadel, z.B. eine Kanüle, zum Durchstechen der Membran aufweisen können. Vorzugsweise sind vor dem Zusammenführen mit der Kartusche sämtliche Zylinderausgänge jeweils mit einer derartigen Membran verschlossen, z.B. durch eine für eine Zylinderreihe gemeinsame Membran.

Die auswechselbaren Module nach der Erfindung können kostengünstig hergestellt werden, z.B. aus Plastik durch Spritzgießen.

Das modulare System nach der Erfindung hat unter anderem folgende Vorteile:
- eine hohe Zuverlässigkeit durch integrierte Kalibrier- und Kontrollfunktionen;
- eine hohe Reproduzierbarkeit der Analysen durch automatisierte Prozessierung in der integrierten Messchipkartusche;
- eine einfache Bedienung (wenig Fehlbedienungsquellen);
- ein robustes System, besonders geeignet für den mobilen Einsatz;
- eine (kosten-)effiziente Verbrauchsmittellogistik durch die einfache Herstellung, Lagerung, Transport der Verbrauchsmittel.

Die Erfindung richtet sich auch auf ein Verfahren zum Durchführen von Multiparameteranalysen chemischer und/oder biologischer Probensubstanzen mittels eines Systems nach der Erfindung, bei dem
a) die Probensubstanz am Probeneingang in eine Probenaufnahme, vorzugsweise eine Kapillare, eines unbenutzten Messchipkartuschenmoduls gegeben wird,
b) das Messchipkartuschenmodul mit dem Reagenzienmodul flüssigkeitsdicht zusammengeführt wird,
c) die Analyse der Probensubstanz durchgeführt wird, wobei die Probensubstanz und die Reagenzien im System mittels der Antriebskolben befördert werden,
d) das benutzte Messchipkartuschenmodul vor jeder neuen Probenmessung gegen ein unbenutztes Messchipkartuschenmodul ausgewechselt wird.

Der obigen Beschreibung des Messchipkartuschenmoduls und des Systems nach der Erfindung sowie der weiter unten folgenden Beschreibung der Ausführungsbeispiele anhand der Figuren sind unter anderem einzelne Merkmale bzw. Merkmalskombinationen eines erfindungsgemäßen Betriebsverfahrens, ggf. spezifisch für eine Ausführungsform, zu entnehmen.

Das System und das Verfahren nach der Erfindung können neben der Point-of-Care-Diagnostik (z.B. für Immuno-Assays) und weiteren medizinischen Bereichen (z.B. für Multiparameter-Bioanalysen auf Basis von Proteintests für den mobilen Einsatz) auch sonst überall dort Anwendung finden, wo eine schnelle, mobile und günstige elektrochemische Analyse von Proben gebraucht wird.

Vorzugsweise wird vor jeder neuen Probenmessung nicht nur die Einweg-Kartusche, sondern auch das Reagenzienmodul gegen ein unbenutztes ausgewechselt. Dies ist jedoch nicht zwingend erforderlich. Vielmehr kann ein Reagenzienmodul für zwei oder mehr Probenmessungen verwendet und zwischen den Messungen z.B. mittels der Kolben flüssigkeitsdicht von der herausnehmbaren Kartusche getrennt werden.

Mit dem erfindungsgemäßen System kann eine Kalibrierung bzw. können Kontrollfunktionen zur Laufzeit der Analyse verwirklicht werden, indem zwei Analysezellen auf einem Chip (bzw. 2 Analyse-Arrays) für eine getrennte, gleichzeitige Prozessierung einer realen Probe und einer Kalibrierlösung (z.B. einer definierten Analytlösung) eingesetzt werden. Eine gleichzeitige und hinsichtlich des Zeitablaufs und der Reagenzienzugabe gleiche (und möglichst identische) Prozessierung der Proben- und der Referenzsubstanz kann z.B. durch einen synchronen Antrieb der Kolben in den für die Probe- und die Referenzsubstanz vorgesehenen einander entsprechenden (z.B. identischen) Reagenzienzylindern verwirklicht werden.

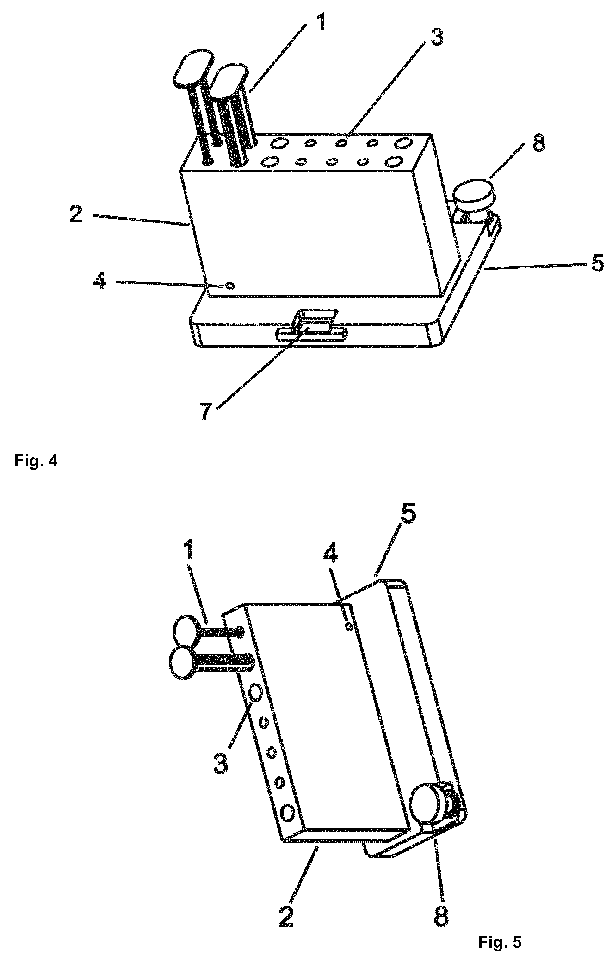

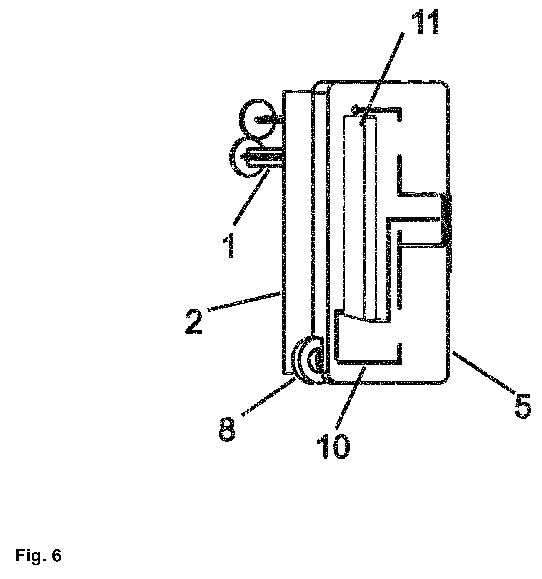

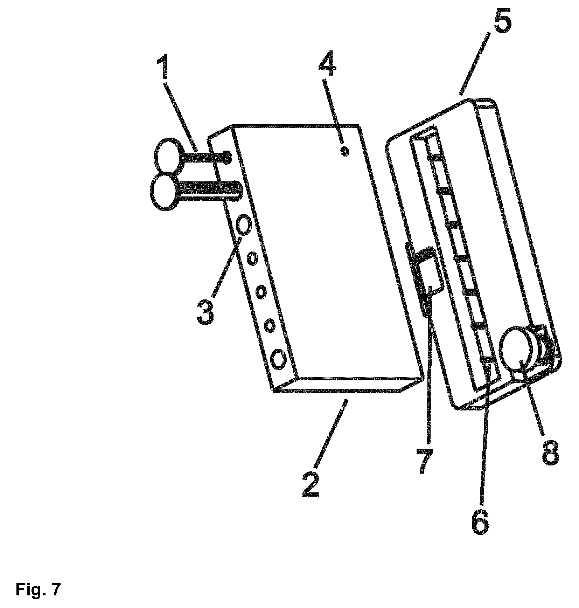

Die Kalibrierlösung kann, z.B. bei einer alternativen Ausführungsform der Kartusche mit nur einer Analysezelle (vgl. Figuren 5-7), auch in einem Probenpuffer integriert sein. Zur Kalibrierung bei einer solchen Variante können in der Analysezelle, die vorzugsweise eine Durchflusszelle darstellt, Kalibrierpositionen vorgesehen sein. Mit einer solchen Ausgestaltung lässt sich eine Kalibrierung zur Laufzeit realisieren, wie oben erläutert.

Eine Kontrolle des Flüssigkeitstransportes über den Chip ist beispielsweise durch die Messung der Heizleistung in Verbindung mit einer Chiptemperaturregelung möglich. Hierzu werden z.B. Veränderungen der Chiptemperatur (die auf bestimmte Sollwerte geregelt wird) durch Kühleffekte beim Pumpen von Luft anstatt Flüssigkeiten über den Chip überwacht. Dies kann einer Erkennung von Fehlfunktionen der Pumpen (bzw. der Kolben oder deren Antriebs) oder von Undichtigkeiten in der Kartusche dienen.

Die erfindungsgemäße Analyse kann von einem externen Gerät, einer Steuerungseinheit, gesteuert werden. Deren Anschlüsse an das erfindungsgemäße System sind vorzugsweise derart ausgestaltet, dass die Steuerungseinheit in keinen unmittelbaren Kontakt mit den Flüssigkeiten gelangt, die bei der Analyse im System fließen. Hierzu kann die Steuerungseinheit z.B. rein elektrisch an das Messchipkartuschenmodul und rein mechanisch an das Reagenzienmodul angeschlossen werden. Der Analysevorgang kann in dem zusammengesetzten System durch die Steuerungseinheit gesteuert vollständig automatisiert verlaufen, wobei die Probensubstanz und die Reagenzien (und/oder ggf. die Referenzsubstanz) im System mittels der angesteuerten Antriebskolben transportiert werden.

Eine für herkömmliche Systeme bekannte Kontamination eines steuernden Geräts durch an der Analyse beteiligte Flüssigkeiten kann mit dem erfindungsgemäßen System durch eine vollständige Trennung der Schnittstellen zur Steuerungseinheit ausgeschlossen werden, indem
- eine fluidische Schnittstelle lediglich zwischen dem Kartuschenmodul und dem Reagenzienmodul (sowie innerhalb des Kartuschenmoduls zum integrierten Chip und ggf. zur Probennahme),
- eine ausschließlich mechanische Schnittstelle zur Steuerungseinheit für den Betrieb der Fluidik im System mittels des Reagenzienmoduls und
- eine ausschließlich elektrische Schnittstelle zur Steuerungseinheit zur Kontaktierung des elektrischen Array-Messchips
- sowie ggf. eine thermische Schnittstelle zu einem zusätzlichen Temperaturmodul, wenn keine "On-Chip-Temperierung" vorgesehen ist,
beim Betrieb des Systems vorliegen.

Zum Betrieb eines Systems nach der Erfindung ist als Verbrauchsmaterial lediglich eine Kombination aus Reagenzienmodul (Lagerung von Flüssig-Reagenzien) und Chip-Kartuschenmodul (Probennahme und -Verdünnungsfunktion plus Messung) erforderlich. Die ggf. vorhandene Steuerungseinheit muss hingegen im Unterschied zu den herkömmlichen Systemen nicht extra gewartet, gefüllt, gereinigt oder ausgewechselt werden.

Die Entnahme und die Entsorgung der Module sind in Form einer geschlossenen flüssigkeitsdichten Einheit möglich, sodass keine Kontaminations- und Verletzungsgefahr für den Verwender oder die Patienten besteht.

Bei der Chipmontage und -Kontaktierung ist eine Reduzierung des Platzbedarfs auf dem Chip (mit einer damit verbundenen Kostenreduktion) für elektrische Kontaktierung und fluidische Abdichtung möglich. Während in bekannten Systemen typischerweise beides auf der Chipoberseite untergebracht ist, sind im System nach der Erfindung neben der ebenfalls möglichen Kontaktierung von der Chipoberseite optional auch
e lektrische Durchkontaktierungen zur Chipunterseite (optional auch ein 3D-Aufbau: ASIC + Bio-MST) und/oder
e ine Chipmontage einschließlich fluidischer Abdichtung ggf. durch eine seitliche Presspassung mittels eines elastischen flüssigkeitsdichten Materials (z.B. Silikon, PDMS) möglich.

Die vorstehend und nachfolgend geschilderten konkreten Beispiele einzelner Fluidikfunktionen in einem System nach der Erfindung, wie z.B. der Kalibriermethode, Probennahme, Probenverdünnung, Reagenzienlagerung und -Prozessierung, sollen nicht als abschließend verstanden werden. Das erfindungsgemäße System und Betriebsverfahren lassen auch andere als explizit geschilderte Kombinationen einzelner Fluidikabläufe und deren anwendungsspezifische Variationen zu, die für den Fachmann ohne Weiteres ersichtlich sind.

Weitere Vorteile der Erfindung werden nachfolgend anhand der in den Zeichnungen und der zugehörigen Beschreibung dargestellten Ausführungsbeispiele erläutert. Diese sollen keine beschränkende Wirkung für den Erfindungsgegenstand haben, sondern als konkrete Beispiele dafür dienen. Insbesondere sind die Figuren schematische Darstellungen, die nicht maßstabsgetreu zu lesen sind.

Es zeigen:
- Fig. 1: ein erstes Ausführungsbeispiel des erfindungsgemäßen Systems mit zwei parallelen Messkanälen für eine Kalibrierung zur Laufzeit der Probenanalyse;
- Fig. 2: eine perspektivische Explosionsdarstellung des Beispiels aus Fig. 1 (Ansicht von unten);
- Fig. 3: eine perspektivische Explosionsdarstellung des Beispiels aus Fig. 1 (Ansicht von oben);
- Fig. 4: Hauptmodule aus Figuren 1-3 im zusammengeführten Zustand;
- Fig. 5: ein zweites Ausführungsbeispiel des erfindungsgemäßen Systems mit einem einzigen Messkanal;
- Fig. 6: eine perspektivische Darstellung des Beispiels aus Fig. 5 (Ansicht von unten);
- Fig. 7: eine perspektivische Explosionsdarstellung des Beispiels aus Fig. 5 (Ansicht von oben);
- Fig. 8: eine schematische Darstellung der einzelnen fluidischen Funktionen im System nach dem ersten Ausführungsbeispiel;
- Fig. 9: eine schematische Darstellung der einzelnen fluidischen Funktionen im erfindungsgemäßen System nach dem zweiten Ausführungsbeispiel.

Als Messchip für die Probenanalyse kann im Rahmen der Erfindung z.B. ein Biochip der in DE 10 2008 027 038 A1 beschriebenen Art eingesetzt werden. Die nachfolgende Beschreibung der in den Figuren gezeigten spezifischen Ausführungsformen bezieht sich daher rein beispielhaft auf einen solchen Biochip als einen Messchip im Sinne der Erfindung. Andere Arten von Messchips, insbesondere solche für rein chemische Analysen, können in allen Fällen eingesetzt werden.

### Bezugszeichenliste:

- 1: Kolben
- 2: Reagenzienblock
- 3: Reagenzienzylinder
- 4: Belüftungsloch
- 5: Kartusche
- 6: Anschlussnadel
- 7: Biochip
- 8: Verschlusskappe
- 9: Membran
- 10: Fluidikkanäle
- 11: Verdünnungs-/Abfall-Kammer
- 12: Dichtfolie
- 13: Probeneingang
- 14a: Durchflusszelle-A
- 14b: Durchflusszelle-B
- 15: Kolbenantriebe
- 16: Kalibriereingang

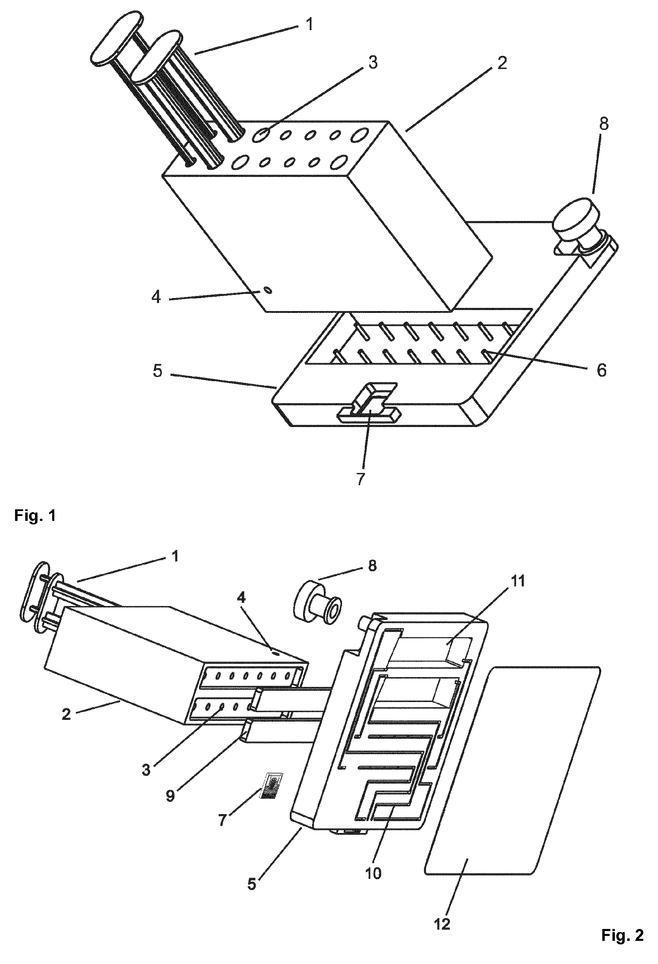

Fig. 1 zeigt eine perspektivische Darstellung eines ersten Ausführungsbeispiels des erfindungsgemäßen Systems mit zwei einander entsprechenden Messkanälen, die eine Kalibrierung der Probenanalyse zur Laufzeit ermöglichen. Das dargestellte integrierte Biochip-Kartuschensystem enthält zwei auswechselbare Hauptmodule, ein Reagenzienlager- und -prozessierungsmodul (kurz: Reagenzienmodul) 1-4 und ein Biochipkartuschenmodul (allgemein: Messchipkartuschenmodul, kurz: Kartusche) 5-8.

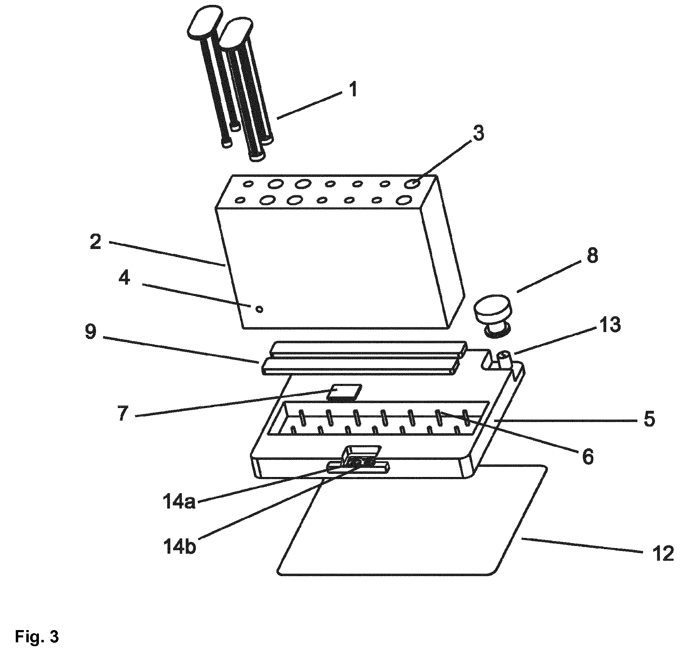

Die einzelnen Komponenten sind in den Explosionsdarstellungen in Fig. 2 (von unten) und in Fig. 3 (von oben) detaillierter gezeigt.

Die Lagerung der verschiedenen für die Analyse benötigten Reagenzien erfolgt in den Reagenzienzylindern 3 des Reagenzienblocks 2. Die Reagenzienzylinder sind durch die Antriebskolben (kurz: Kolben) 1 und die Membranen 9 verschlossen.

Der Biochip 7 im Array-Format (z.B. mit Interdigitalelektroden) stellt eine Detektionseinheit für Multiparameteranalysen dar. Er ist in die Messchipkartusche (kurz: Kartusche) 5 integriert und mittels der Durchflusszellen 14a/b mit dem, bzw. in diesem Beispiel den zwei voneinander getrennten und einander entsprechenden Kanalsystemen (im Folgenden auch: Fluidiksystemen), d.h. den Fluidikkanälen 10 und der Verdünnungs-/Abfall-Kammer 11 für den Probenmesskanal (bzw. der entsprechenden Verdünnungs-/Abfall-Kammer für den Kalibriermesskanal) verbunden. Zur Abdichtung der Fluidikkanäle und der Verdünnungs-/Abfall-Kammern dient eine Dichtfolie 12.

Für eine einfache Probennahme mit einem definierten Volumen befinden sich eine oder mehrere Probenkapillaren mit vorgegebenen Abmessungen in dem Probeneingang 13, der nach der Probennahme mit der Verschlusskappe 8 verschlossen wird. Der Probeneingang eignet sich insbesondere zur Aufnahme von Tropfen, wie z.B. Kapillarblut aus einer Fingerkuppe. Ist die Probensubstanz in einem separaten Vorratsbehälter, z.B. einer Spritze, gesammelt oder aufbereitet worden, so kann sie mittels einer Kanüle ebenfalls in Form von Tropfen dem Probeneingang zugeführt werden. Die flüssige Probensubstanz füllt anschließend die Probenkapillare(n) aufgrund des Kapillareffekts.

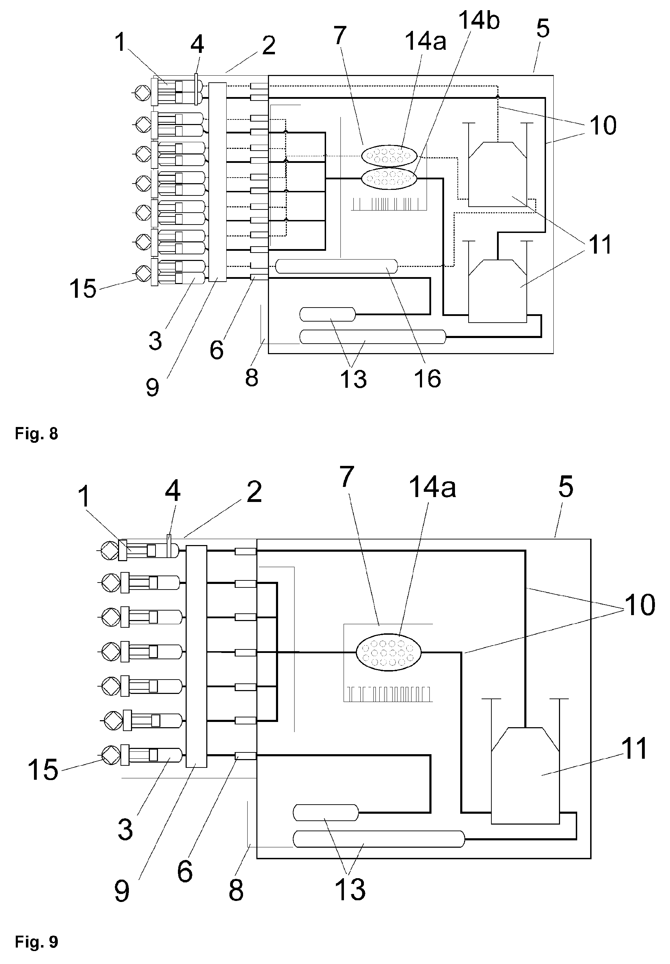

Das Einbringen der eingesammelten Probensubstanz aus der Probenkapillare in das Fluidiksystem der Kartusche erfolgt beispielsweise durch das Verdrängen der Probensubstanz durch die Luft oder eine Spülflüssigkeit, welche über einen Kanal innerhalb der Verschlusskappe bei verschlossenem Probeneingang der Probenkapillare(n) zugeführt wird, vgl. hierzu auch das Diagramm in Fig. 8/9. Alternativ kann die Probensubstanz aus der Probenkapillare in das Fluidiksystem der Kartusche auch durch die Unterdruckerzeugung am Kapillarausgang mittels eines geeigneten Kolbens im angeschlossenen Reagenzienmodul eingesaugt werden.

Bei der Zusammenführung des Kartuschenmoduls mit dem Reagenzienmodul realisieren Anschlussnadeln bzw. -Kanülen 6 eine fluidische Verbindung der Module durch das Durchstechen der Membranen 9. Die Prozessierung der Lösungen für die Realisierung der Fluidikabläufe während des Analysevorganges erfolgt über die Kolben 1, die die entsprechenden Reagenzien aus den Reagenzienzylindern 3 in die Kartusche befördern. Dafür, d.h. während der Fluidikprozessierung, sind Belüftungslöcher 4 geöffnet. Die Kolben werden dabei in einem speziellen Gerät/ der Steuerungseinheit (nicht gezeigt) mit Hilfe automatisierter mechanischer Antriebe grundsätzlich unabhängig voneinander bewegt. Das Gerät erfüllt neben den Antriebsfunktionen zur Fluidiksteuerung auch die Auslesefunktionen für den Biochip.

Die Steuerungseinheit kann z.B. einen elektromechanischen Antrieb für die Kolben 1, einen Prozessor zur digitalen Auswertung der Messsignale vom Biochip und zur Steuerung der Messabläufe und eine Leseeinrichtung zum Auslesen einer Messprotokoll-Software umfassen. Die Steuerungseinheit, insbesondere deren elektrische Anschlüsse an das Kartuschenmodul 5 und mechanische Anschlüsse an das Reagenzienmodul, wird dabei keinem direkten Kontakt mit den im System prozessierten bzw. zu prozessierenden Flüssigkeiten ausgesetzt. Dadurch entfallen die bei bekannten Geräten erforderlichen Wartungs- und Reinigungsmaßnahmen für die Steuerungseinheit, und die Kartusche 5 und der Reagenzienblock 2 können einfach nach jeder Messung ausgetauscht werden.

Nach dem Einstecken des Reagenzienblocks 2 in die Kartusche 5, dem Anschluss an die Steuerungseinheit und dem Verschließen des Probeneingangs mit der Verschlusskappe kann der Analysevorgang vollständig automatisiert verlaufen, von der Steuerungseinheit gesteuert.

Am Ende des Analysevorgangs können die Zylinder 3 mit den Belüftungslöchern 4 durch die entsprechenden Kolben zur Kartusche 5 hin verschlossen werden. Danach kann das Kartuschenmodul als eine geschlossene Einheit herausgenommen und entsorgt werden, während das Reagenzienmodul für eine weitere Messung verwendet werden kann. Alternativ können beide auswechselbaren Hauptmodule als eine zusammengesetzte und ebenfalls nach außen flüssigkeitsdicht verschlossene Einheit nach der Messung entsorgt werden (Fig. 4).

Fig. 1 - Fig. 4 zeigen die erste Ausführungsform nach der Erfindung mit einer 2-Messkanal-Kalibrierfunktion, d.h. es gibt zwei getrennte Fluidiksysteme, die über eine Kopplung im Antriebssystem, z.B. durch eine mechanische Verbindung der Kolben, synchron betrieben werden können.

Fig. 8 skizziert die entsprechenden einzelnen, insbesondere die fluidischen Funktionen in einer schematischen Darstellung. In einem Fluidiksystem der Kartusche 5 wird die Probe zunächst über den Probeneingang 13 zugeführt. Mittels der Kolben 1 gesteuert, z.B. durch die Steuerungseinheit, erfolgt danach eine Verdünnung und Mischung der Probe mit einem Probenpuffer in einer ersten Verdünnungs-/Abfallkammer 11. Parallel dazu wird in einem zweiten Fluidiksystem eine Kalibrierlösung mit bekannten Analytkonzentrationen in eine zweite Verdünnungs-/Abfallkammer gespült, die in der perspektivischen Darstellung der Fig. 2 unterhalb der Kammer 11 zu sehen ist.

Zur Prozessierung der Probe und der Kalibrierlösung durch die Durchflusszellen 14a/b über den Biochip werden die entsprechenden Lösungen aus den Verdünnungs-/Abfallkammern mittels der Kolben 1 nach der Art von Spritzenpumpenantrieben P1-P6 im jeweiligen Fluidiksystem (bzw. Kanalsystem) der Kartusche 5 bewegt. Die Flüssigkeiten können dabei bei spezifischen Analyseabläufen auch in die Zylinder des Reagenzienmoduls gesaugt werden.

Anschließend erfolgt ein Zurückspülen in die Verdünnungs-/Abfallkammer. Diese Vorgänge laufen, wie auch das Spülen der weiteren Reagenzien über den Biochip in die Abfallkammer, für beide Fluidiksysteme synchron ab. Die verschiedenen Bereiche auf dem Biochip, die durch die beiden getrennten Durchflussbereiche getrennt sind, erfahren dabei einen identischen Prozessablauf. In Verbindung mit der genauen Kenntnis über die Zusammensetzung und/oder Parameter, wie z.B. Konzentrationen, der Referenzsubstanz/Kalibrierlösung lässt sich auf diese Weise eine präzise Kalibrierung der Probenanalyse zur Laufzeit realisieren. Des Weiteren führen weitere Funktionen, wie z.B. Positivkontrollpositionen, in jedem Durchflussbereich und die Kontrolle des Flüssigkeitsstromes über den Biochip, zu einer Verbesserung der Qualitätskontrolle bei jeder Analyse.

Fig. 5 - Fig. 7 sowie Fig. 9 stellen eine erfindungsgemäße Lösungsvariante ohne 2-Messkanal-Kalibrierfunktion dar. Die Kalibrierung kann in einem solchen System über einzelne Kalibrierpositionen auf demselben Array in einer gemeinsamen Durchflusszelle des Messchips realisiert werden, wie oben beschrieben.

Eine wesentliche Erhöhung des Integrationsgrades der Analysevorgänge im System nach der Erfindung gegenüber den herkömmlichen Systemen erfolgt durch eine gleichartige, ggf. gemeinsame, ggf. sogar identische und/oder simultane Ansteuerung der Kolben 1 zur Reagenzien- und Probensubstanzbeförderung in den Fluidkanälen 10 (der Antrieb erfolgt dabei ggf. simultan und identisch für den Proben- und ggf. den Referenzmesskanal) und dem durch die Verschlusskappe verschlossenen Probeneingang.

Das Probenvolumen kann z.B. durch eine präzise Abmessung der Probenkapillare dosiert werden, die beim Eintauchen in die Probenflüssigkeit (z.B. in einen Tropfen) durch Kapillarkräfte vollständig mit der Probe gefüllt wird. Bei Verwendung von Wischproben auf Filterpapier mit bekannter Saugfähigkeit kann die Dosierung der Probensubstanz z.B. durch das Ausstanzen eines vorgegebenen Volumens der Wischprobe und das Zugeben eines genau abgemessenen Volumens an Spülflüssigkeit erfolgen. Im Fall von festen pulverartigen Probensubstanzen, wie z.B. Trockenblut, kann eine präzise Dosierung durch das Füllen eines Behälters (z.B. im Probeneingang integriert) mit vorgegebenem Volumen und Zugabe eines vorgegebenen Volumens an Lösungs- oder Spülflüssigkeit erfolgen. Durch eine vollständig automatisierte Zugabe von diversen Reagenzien aus dem Reagenzienmodul in die Kartusche ist eine manuelle Dosierung durch den Bediener des Systems gegenstandslos oder allenfalls auf eine reproduzierbare Minimalhandlung wie das Füllen eines sichtbaren Behälters mit Trockenpulver reduziert.

## Patentansprüche

1. Einweg-Chipkartuschen-System zur Durchführung vorzugsweise mobiler Multiparameteranalysen chemischer und/oder biologischer Substanzen, umfassend
a) ein auswechselbares Messchipkartuschenmodul, umfassend
- einen Probeneingang zum Einbringen einer Probensubstanz von außen in das Messchipkartuschenmodul,
- separat davon mindestens einen Reagenzieneingang zum Einbringen von Reagenzien von außen in das Messchipkartuschenmodul,
- einen Messchip, dessen für die Probenanalyse vorgesehene Oberfläche zumindest teilweise eine Analysezelle mit zwei Öffnungen begrenzt, derart, dass eine die Probensubstanz umfassende Flüssigkeit durch eine erste Öffnung in die Analysezelle zur Probenanalyse gelangen kann, sowie
- ein Kanalsystem, in dem die Probensubstanz vom Probeneingang zur Analysezelle und die Reagenzien von dem mindestens einen Reagenzieneingang zur Analysezelle transportiert werden können, wobei das Kanalsystem vor dem Einbringen der Probensubstanz über den Probeneingang und/oder der Reagenzien über den mindestens einen Reagenzieneingang keine festen Reagenzien, vorzugsweise keine weiteren Substanzen als Luft und/oder Schutzgas, aufweist; sowie
b) ein auswechselbares und als ein einheitlicher Block ausgestaltetes Reagenzienmodul, das zwei oder mehr Reagenzienzylinder zur Aufnahme von Reagenzien aufweist, wobei jeder Zylinder mit einem Antriebskolben zur Beförderung der Probensubstanz sowie der Reagenzien im System und einem Zylinderausgang zum flüssigkeitsdichten Anschluss an einen Reagenzieneingang des Messchipkartuschenmoduls versehen ist.

2. System nach Anspruch 1, bei dem die Analysezelle des Messchipkartuschenmoduls eine Durchflusszelle ist, derart, dass eine die Probensubstanz umfassende Flüssigkeit durch die erste Öffnung in die Durchflusszelle gelangen und durch die zweite Öffnung die Durchflusszelle verlassen kann.

3. System nach einem der voranstehenden Ansprüche, bei dem das Messchipkartuschenmodul zwei identische Analysezellen auf der für die Probenanalyse vorgesehenen Oberfläche des Messchips sowie zwei separate, einander entsprechende Kanalsysteme zur simultanen Prozessierung der Proben- und einer Referenzsubstanz zur Kalibrierung der Probenanalyse aufweist, wobei zwei einander entsprechende Reagenzieneingänge vorgesehen sind, deren einer für das Einbringen von Luft oder Puffer zur Probenverdünnung und der andere für das Einbringen der Referenzsubstanz vorgesehen ist.

4. System nach einem der voranstehenden Ansprüche, bei dem das Messchipkartuschenmodul zwei oder mehr Reagenzieneingänge zum Einbringen von zwei oder mehr unterschiedlichen Reagenzien in das Kanalsystem aufweist.

5. System nach einem der voranstehenden Ansprüche, bei dem das Kanalsystem des Messchipkartuschenmoduls einen Spülkanal zum Spülen der Probensubstanz aus dem Probeneingang zum weiteren Transportieren zur Analysezelle aufweist, wobei ein Ende des Spülkanals ein Reagenzieneingang zur Aufnahme eines Spülfluids, insbesondere eines Puffers, ist.

6. System nach einem der voranstehenden Ansprüche, bei dem der Probeneingang des Messchipkartuschenmoduls eine Kapillare zur Aufnahme der Probensubstanz sowie eine Verschlusskappe zum Verschließen der Kapillare nach einer Probennahme aufweist.

7. System nach Anspruch 5 und 6, bei dem die Verschlusskappe einen im verschlossenen Zustand des Probeneingangs an die Kapillare flüssigkeitsdicht anschließenden Verschlusskappenkanal zur Verbindung der Kapillare mit dem Spülkanal aufweist.

8. System nach einem der voranstehenden Ansprüche, bei dem das Kanalsystem des Messchipkartuschenmoduls eine erste Verdünnungs- und/oder Abfallkammer aufweist, die mit dem Probeneingang zur Aufnahme der Probensubstanz und/oder mit einem Eingang zur Belüftung und/oder mit einem Reagenzieneingang zum weiteren Transport der Probensubstanz zur Analysezelle und/oder mit der zweiten Öffnung der Durchflusszelle nach Anspruch 2 zur Aufnahme der verbrauchten Probensubstanz verbunden ist.

9. System nach einem der voranstehenden Ansprüche, bei dem das Kanalsystem des Messchipkartuschenmoduls eine oder mehrere Mischkammern aufweist, in der/denen die Proben- oder eine Referenzsubstanz auf dem Weg zur Analysezelle mit einem oder mehreren Reagenzien vermischt werden können und die hierzu mit dem Probeneingang und/oder einem bzw. mehreren Reagenzieneingängen verbunden sind.

10. System nach einem der voranstehenden Ansprüche, das ein abtrennbares Probennahmemodul zum Einsammeln der Probensubstanz mit einem Probenausgang umfasst, der flüssigkeitsdicht an den Probeneingang des Messchipkartuschenmoduls anschließbar ist.

11. System nach einem der voranstehenden Ansprüche, umfassend
a) ein auswechselbares Messchipkartuschenmodul gemäß Anspruch 3 und
b) ein auswechselbares Reagenzienmodul mit zwei einander entsprechenden, vorzugsweise identischen Sets von Reagenzienzylindern.

12. System nach einem der voranstehenden Ansprüche, bei dem einer, mehrere oder alle Zylinderausgänge des Reagenzienmoduls mit einer Membran flüssigkeitsdicht verschlossen sind und der oder die entsprechenden Reagenzieneingänge des Messchipkartuschenmoduls jeweils eine Hohlnadel zum Durchstechen der Membran aufweisen.

13. Verfahren zum Durchführen von Multiparameteranalysen chemischer und/oder biologischer Probensubstanzen mittels eines Systems nach einem der Ansprüche 1 bis 12, bei dem
a) die Probensubstanz dem Probeneingang zugeführt wird,
b) das Messchipkartuschenmodul mit dem Reagenzienmodul flüssigkeitsdicht verbunden wird,
c) die Probenanalyse durchgeführt wird, wobei die Proben- und/oder eine Referenzsubstanz und die Reagenzien im System mittels der Antriebskolben in die Analysezelle(n) befördert werden,
d) das benutzte Messchipkartuschenmodul vor jeder neuen Probenmessung gegen ein unbenutztes Messchipkartuschenmodul ausgewechselt wird.

14. Verfahren nach Anspruch 13, bei dem die Probenanalyse nach einer gemäß Schritt a) abgeschlossenen Probennahme in einem gemäß Schritt b) zusammengesetzten System von einem externen Gerät gesteuert automatisiert verläuft, wobei das externe Gerät den/die Antriebskolben bewegt und/oder elektrische Messsignale des Messchips ausliest und dabei keinen Flüssigkeitskontakt aufweist.

15. Verfahren nach einem der Ansprüche 13 und 14 unter Verwendung eines Systems nach Anspruch 11, bei dem parallel zu der in einem ersten Kanalsystem und in einer ersten Analysezelle verlaufenden Probenanalyse eine bekannte Referenzsubstanz in dem zweiten Kanalsystem und der zweiten Analysezelle analysiert wird, wobei die Proben- und die Referenzsubstanz synchron einer gleichen Prozessierung und Messung unterworfen werden, indem die entsprechenden Antriebskolben der beiden Sets von Reagenzienzylindern synchron bewegt werden.

16. Verwendung des Einweg-Chipkartuschen-Systems nach einem der Ansprüche 1 bis 12 für die Point-of-Care-Diagnostik, insbesondere für Immuntests, und/oder für mobile Multiparameter-Bioanalysen, insbesondere für Bluttests bei einem mobilen Einsatz.

## Claims

1. Disposable chip cartridge system for conducting preferably mobile multi-parameter analyses of chemical and/or biological substances, comprising
a) a replaceable measuring chip cartridge module, comprising
- a sample inlet for the extraneous introduction of a sample substance into the measuring chip cartridge module,
- separately thereof at least one reagent inlet for the extraneous introduction of reagents into said measuring chip cartridge module,
- a measuring chip, the surface of which, as far as being designed for sample analysis, at least partially confines an analysis cell with two openings, such that a liquid comprising said sample substance can pass into the analysis cell through a first opening for the sample analysis, as well as
- a channel system, in which said sample substance can be conveyed from said sample inlet to said analysis cell and said reagents can be conveyed from the at least one reagent inlet to said analysis cell, wherein said channel system does not comprises any solid reagents, and preferably does not comprise any other substances apart from air and/or inert gas, prior to the introduction of said sample substance via said sample inlet and/or said reagents via at least the one reagent inlet,
as well as
b) a replaceable reagent module designed as a uniform block, having two or more reagent cylinders for receiving reagents, wherein each cylinder is provided with a drive piston for conveying said sample substance as well as said reagents in the system and a cylinder outlet for the liquid-tight connection to a reagent inlet of the measuring chip cartridge module.

2. System according to Claim 1, in which said analysis cell of said measuring chip cartridge module is a flow-through cell, such that a liquid comprising said sample substance can pass into said flow-through cell through the first opening and exit said flow-through cell through the second opening.

3. System according to one of the previous claims, in which said measuring chip cartridge module has two identical analysis cells on said surface of said measuring chip designed for the analysis of samples as well as two separate channel systems, corresponding to each other, for simultaneously processing the sample substance and a reference substance for the calibration of the sample analysis, wherein two reagent inlets corresponding to each other are provided, one of which is provided for introducing air or buffers to dilute samples and the other is provided for introducing a reference substance.

4. System according to one of the previous claims, in which said measuring chip cartridge module has two or more reagent inlets for the introduction of two or more different reagents into the channel system.

5. System according to one of the previous claims, in which said channel system of said measuring chip cartridge module has a rinsing channel for rinsing said sample substance from said sample inlet for the further conveying to said analysis cell, wherein one end of said rinsing channel is a reagent inlet for receiving a rinsing fluid, particularly a buffer.

6. System according to one of the previous claims, in which said sample inlet of said measuring chip cartridge module has a capillary for receiving said sample substance as well as an end cap for closing said capillary after taking a sample.

7. System according to Claims 5 and 6, in which said end cap has an end cap channel that, during a closed condition of the sample inlet, is linked to the said capillary in a liquid-tight manner, in order to connect the capillary to said rinsing channel.

8. System according to one of the previous claims, in which said channel system of said measuring chip cartridge module has a first dilution and/or waste chamber, which is connected to the said sample inlet for receiving said sample substance and/or to an inlet for ventilating and/or to a reagent inlet for the further conveying of said sample substance to said analysis cell and/or to said second opening of the flow-through cell of claim 2 for receiving said used sample substance.

9. System according to one of the previous claims, in which said channel system of said measuring chip cartridge module has one or more mixing chambers, in which said sample substance or a reference substance can be mixed with one or more reagents along the way to said analysis cell, and which are connected for this purpose to said sample inlet and/or one or more reagent inlets, respectively.

10. System according to one of the previous claims, comprising a detachable sampling module for collecting said sample substance with a sample outlet, which can be attached to said sample inlet of said measuring chip cartridge module in a liquid-tight manner.

11. System according to one of the previous claims, further comprising
a) a replaceable measuring chip cartridge module pursuant to claim 3 and
b) a replaceable reagent module having two, preferably identical sets of reagent cylinders, corresponding to each other.

12. System according to one of the previous Claims, in which one, multiple or all cylinder outlets of said reagent module are connected to a membrane in a liquid-tight manner and the corresponding reagent inlet or inlets of said measuring chip cartridge module has, or have, respectively, a hollow needle for puncturing said membrane.

13. Process for conducting multi-parameter analyses of chemical and/or biological sample substances by means of a system according to one of the claims 1 to 12, in which
a) said sample substance is fed to said sample inlet,
b) said measuring chip cartridge module is connected to said reagent module in a liquid-tight manner,
c) said sample analysis is conducted, wherein said sample substance and/or a reference substance and said reagents are conveyed in the system by means of said drive pistons to said analysis cell(s), and
d) the used measuring chip cartridge module is replaced with an unused measuring chip cartridge module prior to every new sample measurement.

14. Process according to Claim 13, in which said sample analysis runs automatically controlled by an external device following sampling completed pursuant to step a) in a system composed pursuant to step b), wherein said external device moves said drive piston(s) and/or reads electrical measurement signals of said measuring chip and without coming into contact with fluid in the process.

15. Process according to one of the Claims 13 and 14 using a system according to claim 11 in which a known reference substance is analyzed in the second channel system and the second analysis cell running parallel to that in the first channel system and in the first analysis cell, wherein said sample substance and said reference substance are synchronously subjected to identical processing and measurement by synchronous movement of the respective drive pistons of the two sets of reagent cylinders.

16. Use of the disposable chip cartridge system according to one of the Claims 1 to 12 for point-of-care diagnostics, particularly for immunology tests, and/or for mobile multi-parameter bioanalyses, particularly for blood tests in the case of a mobile application.

## Revendications

1. Système de cartouche à puce jetable pour l'exécution d'analyses multi-paramètres de préférence mobiles de substances chimiques et/ou biologiques, comprenant
a) un module de cartouche à puce de mesure interchangeable, comprenant
- une entrée d'échantillon pour l'introduction d'une substance échantillon à partir de l'extérieur dans le module de cartouche à puce de mesure,
- séparément de celle-ci, au moins une entrée de réactifs pour l'introduction de réactifs à partir de l'extérieur dans le module de cartouche à puce de mesure,
- une puce de mesure, dont la surface prévue pour l'analyse d'échantillon limite, au moins partiellement, une cellule d'analyse à deux ouvertures, de telle manière qu'un liquide comprenant la substance échantillon puisse parvenir, par une première ouverture, dans la cellule d'analyse pour l'analyse d'échantillon, ainsi que
- un système de canal, dans lequel la substance échantillon provenant de l'entrée d'échantillon peut être transportée vers la cellule d'analyse et les réactifs provenant de ladite au moins une entrée de réactifs peuvent être transportés vers la cellule d'analyse, dans lequel le système de canal ne présente, avant l'introduction de la substance échantillon via l'entrée d'échantillon et/ou des réactifs via ladite au moins une entrée de réactifs, aucun réactif solide, de préférence aucune autre substance que l'air et/ou un gaz de protection; et
b) un module de réactifs interchangeable et configuré en un bloc unitaire, qui présente deux ou plusieurs cylindres à réactifs destinés à contenir des réactifs, dans lequel chaque cylindre est muni d'un piston d'entraînement pour le transport de la substance échantillon ainsi que des réactifs dans le système et d'une sortie de cylindre pour le raccordement étanche au liquide à une entrée de réactifs du module de cartouche à puce de mesure.

2. Système selon la revendication 1, dans lequel la cellule d'analyse du module de cartouche à puce de mesure est une cellule à circulation, de telle manière qu'un liquide comprenant la substance échantillon puisse arriver dans la cellule à circulation par la première ouverture et quitter la cellule à circulation par la deuxième ouverture.

3. Système selon l'une quelconque des revendications précédentes, dans lequel le module de cartouche à puce de mesure présente deux cellules d'analyse identiques sur la surface de la puce de mesure prévue pour l'analyse d'échantillon ainsi que deux systèmes de canal séparés, se correspondant mutuellement, pour le traitement simultané de la substance échantillon et d'une substance de référence pour le calibrage de l'analyse d'échantillon, dans lequel il est prévu deux entrées de réactifs se correspondant mutuellement, dont l'une est prévue pour l'introduction d'air ou de tampon pour la dilution de l'échantillon et l'autre est prévue pour l'introduction de la substance de référence.

4. Système selon l'une quelconque des revendications précédentes, dans lequel le module de cartouche à puce de mesure présente deux ou plusieurs entrées de réactifs pour l'introduction de deux ou de plusieurs réactifs différents dans le système de canal.

5. Système selon l'une quelconque des revendications précédentes, dans lequel le système de canal du module de cartouche à puce de mesure présente un canal de rinçage pour rincer la substance échantillon hors de l'entrée d'échantillon en vue de son transport ultérieur vers la cellule d'analyse, dans lequel une extrémité du canal de rinçage est une entrée de réactifs destinée à recevoir un fluide de rinçage, en particulier un tampon.

6. Système selon l'une quelconque des revendications précédentes, dans lequel l'entrée d'échantillon du module de cartouche à puce de mesure présente un capillaire destiné à recevoir la substance échantillon ainsi qu'un capuchon de fermeture pour fermer le capillaire après une prise d'échantillon.

7. Système selon la revendication 5 et 6, dans lequel le capuchon de fermeture présente, dans l'état fermé de l'entrée d'échantillon, un canal de capuchon de fermeture se raccordant de façon étanche au liquide au capillaire pour le raccordement du capillaire au canal de rinçage.

8. Système selon l'une quelconque des revendications précédentes, dans lequel le système de canal du module de cartouche à puce de mesure présente une première chambre de dilution et/ou à déchets, qui est reliée à l'entrée d'échantillon pour recevoir la substance échantillon et/ou à une entrée destinée à l'aération et/ou à une entrée de réactifs en vue du transport ultérieur de la substance échantillon vers la cellule d'analyse et/ou à la deuxième ouverture de la cellule à circulation selon la revendication 2 afin de recevoir la substance échantillon consommée.

9. Système selon l'une quelconque des revendications précédentes, dans lequel le système de canal du module de cartouche à puce de mesure présente une ou plusieurs chambres de mélange, dans laquelle/lesquelles la substance échantillon ou une substance de référence peut/peuvent être mélangée(s) avec un ou plusieurs réactif (s) sur le chemin vers la cellule d'analyse et qui est/sont à cet effet reliée(s) à l'entrée d'échantillon et/ou à une ou plusieurs entrée(s) de réactifs.

10. Système selon l'une quelconque des revendications précédentes, qui comprend un module de prise d'échantillon séparable destiné à recueillir la substance échantillon avec une entrée d'échantillon, qui peut être raccordée de façon étanche au liquide à l'entrée d'échantillon du module de cartouche à puce de mesure.

11. Système selon l'une quelconque des revendications précédentes, comprenant
a) un module de cartouche à puce de mesure interchangeable selon la revendication 3, et
b) un module de réactifs interchangeable avec deux ensembles de cylindres à réactifs se correspondant mutuellement, de préférence identiques.

12. Système selon l'une quelconque des revendications précédentes, dans lequel une, plusieurs ou toutes les sorties de cylindre du module de réactifs est/sont fermée(s) de façon étanche au liquide avec une membrane et la ou les sorties de réactifs correspondante(s) du module de cartouche à puce de mesure présente(nt) respectivement une aiguille creuse pour transpercer la membrane.

13. Procédé pour l'exécution d'analyses multi-paramètres de substances échantillons chimiques et/ou biologiques au moyen d'un système selon l'une quelconque des revendications 1 à 12, dans lequel
a) on fournit la substance échantillon à l'entrée d'échantillon,
b) on raccorde de façon étanche au liquide le module de cartouche à puce de mesure au module de réactifs,
c) on exécute l'analyse d'échantillon, dans lequel on transporte la substance échantillon et/ou une substance de référence et les réactifs dans le système dans la/les cellule(s) d'analyse, au moyen du piston d'entraînement,
d) on remplace le module de cartouche à puce de mesure usagé par un module de cartouche à puce de mesure neuf avant chaque nouvelle mesure d'échantillon.

14. Procédé selon la revendication 13, dans lequel l'analyse d'échantillon se déroule, après une prise d'échantillon opérée selon l'étape a) dans un système composé selon l'étape b), de manière automatique sous la conduite d'un appareil externe, dans lequel l'appareil externe déplace le/les piston(s) d'entraînement et/ou émet des signaux électriques de la puce de mesure et ne présente en l'occurrence aucun contact avec le liquide.

15. Procédé selon l'une des revendications 13 et 14, avec utilisation d'un système selon la revendication 11, dans lequel, en parallèle à l'analyse d'échantillon se déroulant dans un premier système de canal et une première cellule d'analyse, on analyse une substance de référence connue dans le deuxième système de canal et la deuxième cellule d'analyse, dans lequel la substance échantillon et la substance de référence sont soumises de façon synchrone à un traitement et une mesure identiques, par le fait que les pistons d'entraînement correspondants des deux ensembles de cylindres à réactifs sont déplacés de façon synchrone.

16. Utilisation du système de cartouche à puce jetable selon l'une quelconque des revendication 1 à 12 pour le diagnostic Point-of-Care, en particulier des tests immunologiques, et/ou pour des analyses biologiques multi-paramètres, en particulier pour des tests sanguins lors d'une utilisation mobile.
